Europäisches Patentamt

European Patent Office

Office européen des brevets

(11) Publication number: 0 248 492
A1

# EUROPEAN PATENT APPLICATION

(21) Application number: 87201025.1

(22) Date of filing: 01.06.87

(51) Int. Cl.³: C 08 K 3/24
C 08 L 23/02

(30) Priority: 02.06.86 NL 8601411

(43) Date of publication of application:
09.12.87 Bulletin 87/50

(84) Designated Contracting States:
AT BE CH DE ES FR GB GR IT LI LU NL SE

(71) Applicant: STAMICARBON B.V.
Mijnweg 1
NL-6167 AC Geleen(NL)

(72) Inventor: Engels, Johannes Carolus Augustinus
Heistraat 2
NL-6136 BD Sittard(NL)

(74) Representative: Hoogstraten, Willem Cornelis
Roeland et al,
OCTROOIBUREAU DSM Postbus 9
NL-6160 MA Geleen(NL)

(54) Process to prevent the blocking of plastic films.

(57) The invention comprises a process to prevent the blocking of plastic films of at least 5 $\mu$m thickness by the addition of a powdery antiblocking agent with an average particle size of from 3-10 $\mu$m, wherein the antiblocking agent used is a hydrotalcite with the empirical formula $Mg_{1-x}Al_x(OH)_2A_{x/n}^{n-} \cdot m\,H_2O$, where $0 < x \leq 0.5$, $A^{n-}$ is an anion with valence n and $m \geq 0$, in an amount of 0,05 to 1 % (wt) calculated on the plastic.

EP 0 248 492 A1

0248492

 AE 5553

## PROCESS TO PREVENT THE BLOCKING OF PLASTIC FILMS

The invention relates to a process to prevent the blocking of plastic films of at least 5 $\mu$m thickness by the addition of a powdery antiblocking agent with an average particle size of from 3-10 $\mu$m.

In the packaging industry frequent use is made of thermoplastic synthetic films. These often tend to cling to themselves during production, storage and processing. This phenomenon is also called 'blocking'. It is felt to be a great nuisance, because it is difficult to process the blocked film and, for instance, bags made from the film cannot or hardly be opened. Also, blocking interferes with the rate of processing. That is why so-called antiblocking agents have been marketed for a long time, which generally have a particle size of 2 to 10 $\mu$m and which are used in a percentage by weight of about 0.05 to 0.4. The best known antiblocking agents substantially consist of $SiO_2$ and have a specific BET surface of about 400 m$^2$/g.

The use of the known antiblocking agents is effective, but the disadvantage is that the optical properties of the film deteriorate already with rather small percentages by weight of antiblocking agent; the gloss becomes worse and the opacity in particular increases. This is an impediment in the case of thinner films in particular, because a smaller particle size is to be applied there for the ease of processing thin films and to prevent the film from breaking, and consequently larger amounts of antiblocking agent are required.

The object of the invention is to find an antiblocking agent that does not have the said disadvantages in effective action.

This object is achieved by the addition of a hydrotalcite having the formula $Mg_{1-x}Al_x(OH)_2A_{x/n}^{n-} \cdot m\ H_2O$, where $0 < x < 0.5$, $A^{n-}$ is an anion with valence n and m > 0, in an amount of 0,05 to 1 % (wt) calculated on the plastic.

This kind of hydrotalcite is known from DE-A 2950489, in

0248492

AE 5553

which its use as a halogen-binding agent is described.

It has now surprisingly been found that, added to a plastic, such a hydrotalcite provides a composition that allows itself to be well processed to form a film with low blocking tendency and without adverse effects for the optical properties of the film. The latter is presumably due to the refractive index of the hydrotalcite, which compares with that of the plastic, but this is not certain.

For thicker films or, in case of multi-layer films, thicker film layers (5 µm and thicker) preference will be given to using a particle size of 3-10 µm, particularly 3-5 µm, and more particularly 3.5-5 µm, in a percentage by weight of 0.05 to 1% (wt), particularly 0.1 to 0.5% (wt) and more particularly 0.1 to 0.35% (wt).

For thinner films or, in case of multi-layer films, thinner film layers (5 µm and lower) preference will be given to a particle size lower than 3 µm, particularly lower than 2 µm and more particularly lower than 1 µm with a percentage by weight of 0.5-5, particularly 1-3. In that case the particle size distribution must not be too wide, for instance a standard deviation of less than half the average particle size.

The use of hydrotalcite as antiblocking agent is pre-eminently suited for films produced from poly-1-alkenes, especially ethylene (co)polymers and in particular ethylene copolymers having as comonomer a 1-alkene with 3 to 20 carbon atoms, preferably 1-octene.

The anion of the hydrotalcite used in the invention is preferably a carbonate.

Besides hydrotalcite other additives, such as stabilizers, lubricants, etc., may be present in the plastic to be processed into film. Stabilizers often have the function to reduce the sensitiveness to UV radiation or thermal degradation of the plastic. Lubricants serve to minimize the friction between moving surfaces of contact, which often occurs in the preparation and processing of films.

It has now surprisingly been found that the process according to the invention can be applied very successfully when, in addition to the hydrotalcite, a lubricant, too, is present in the film. Owing to the presence of the hydrotalcite the amount of lubricant required for

a particular effect is reduced and values of friction can be reached that would not be obtained without the presence of hydrotalcite. This effect is strongest when the hydrotalcite has a specific BET surface of 100 m$^2$/g at most, preferably 80 m$^2$/g at most and particularly 60 m$^2$/g at most.

The chosen lubricant may be one of the usual compounds such as, for instance, unsaturated fatty acid amides with 12 to 30, preferably 18 to 21 carbon atoms. These lubricants are used in amounts of 0.01 to 0.5% (wt), preferably between 0.01 and 0.2% (wt) calculated on the plastic.

The plastic film may be a single or multi-layer film and be produced in the usual manner, for instance by cast film extrusion or blown film extrusion.

The invention will now be elucidated by some examples.

Examples

Cast film was prepared on a Covema $^R$ line. The length/ diameter ratio of the extruder was 30, the diameter 60 mm. The die gap was 0,5 mm. The melt temperature was 280¤C. The temperature of the first cooling roll was 15¤C. A 25 μm thick film was prepared out of an ethylene-1-octene copolymer with a density (ASTM D 1505) of 911 kg/m$^3$ and a melt index (ASTM D 1238, cond. E) of 7 dg/min that had been polymerized with a Ti-catalyst, provided with a kind and amount of antiblocking agent as indicated in the table. Of this film the gloss was determined according to ASTM D 2457 (45¤), the opacity according to ASTM D 1003, the transparency according to the Electro Evens Ltd. method.

In order to determine the blocking tendency, the force was measured required to pull two pieces of film, one kept on top of the other for 72 hr. at 23¤C and a pressure of 1,1 N/cm$^2$, apart in a direction perpendicular to the surface of contact.

The customary antiblocking agent applied in the comparative example was the zeolite Sipernat 44 $^R$ of Degussa A.G., particle size 3-4 μm, whereas the hydrotalcite applied in the example was obtained from Kyowa Chemical Industries Co. Ltd., and had a particle size of 3,1 μm and the formula Mg 4,5 Al$_2$(OH) 13 CO$_3$ . 3,5 H$_2$O.

## T A B L E

|  |  | Example | Comparative Example |
|---|---|---|---|
| antiblocking agent % wt. |  | 0,4 | 0,4 |
| blocking | cN | 23,3 | 27,5 |
| gloss | o/oo | 94,1 | 92,9 |
| transparency EEL |  | 2,3 | 15,4 |
| opacity | % | 0,5 | 2,2 |

The examples show that the process according to the invention results in a film with a slightly better gloss, and highly improved transparency and opacity, whereas the anti-blocking properties are also improved.

# C L A I M S

1. Process to prevent the blocking of plastic films of at least 5 μm thickness by the addition of a powdery antiblocking agent with an average particle size of from 3-10 μm, characterized in that the antiblocking agent used is a hydrotalcite with the empirical formula $Mg_{1-x}Al_x(OH)_2 A_{x/n}^{n-} \cdot m\ H_2O$, where $0 < x < 0.5$, $A^{n-}$ is an anion with valence n and $m > 0$, in an amount of 0,05 to 1 % (wt) calculated on the plastic.

2. Process according to claim 1, characterized in that 0.1 to 0.5% (wt) hydrotalcite is used.

3. Process according to any one of claims 1-2, characterized in that the plastic film has been produced from poly-1-alkene.

4. Process according to claim 3, characterized in that the poly-1-alkene is an ethylene (co)polymer.

5. Process according to claim 4, characterized in that the ethylene (co)polymer is an ethylene copolymer the comonomer of which is a 1-alkene with three to twenty carbon atoms.

6. Process according to claim 5, characterized in that the comonomer is 1-octene.

7. Process according to any one of claims 1-6, characterized in that the anion of the hydrotalcite is a carbonate.

8. Process according to any one of claims 1-7, characterized in that the hydrotalcite has a specific BET surface of 100 $m^2/g$ at most.

9. Process according to any one of claims 1-8, characterized in that, in addition to the hydrotalcite, a lubricant is added also.

10. Process according to claim 9, characterized in that 0.01 to 0.5% (wt) lubricant calculated on the plastic is added.

11. Process according to claims 9-10, characterized in that the lubricant is a fatty acid amide with 12 to 30 carbon atoms.

12. Article, comprizing a film according to any one of claims 1-11.

**European Patent Office**

## EUROPEAN SEARCH REPORT

## DOCUMENTS CONSIDERED TO BE RELEVANT

| Category | Citation of document with indication, where appropriate, of relevant passages | Relevant to claim | CLASSIFICATION OF THE APPLICATION (Int. Cl 4) |
|---|---|---|---|
| X | FR-A-2 532 652 (TOYO SODA MANUFACTURING CO.) * Claim 1; page 5, lines 21-22; page 13, example 11 * | 1-12 | C 08 K 3/24 C 08 L 23/02 |
| A | PATENT ABSTRACTS OF JAPAN, vol. 7, no. 53 (C-154)[1198], 3rd December 1983; & JP-A-57 200 433 (MITSUI SEKIYU KAGAKU KOGYO K.K.) 08-12-1982 | 1,3-4 | |
| A | GB-A-2 075 989 (KYOWA CHEMICAL INDUSTRY CO.) * Claims * | 1 | |

|  | TECHNICAL FIELDS SEARCHED (Int. Cl 4) |
|---|---|
| | C 08 K C 08 L |

The present search report has been drawn up for all claims

| Place of search | Date of completion of the search | Examiner |
|---|---|---|
| THE HAGUE | 09-09-1987 | HOFFMANN K.W. |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

& : member of the same patent family, corresponding document

EPO Form 1503 03 82